# EUROPEAN PATENT APPLICATION

(11) **EP 4 428 054 A1**
(43) Date of publication of application: **11.09.2024**
(21) Application number: 22921268.3
(22) Date of filing: 02.03.2022
(51) Int. Cl.: B65D 47/34, B05B 11/00

(54) **RECYCLABLE ALL-PLASTIC SELF-LOCKING PUMP**

(30) Priority: 18.01.2022 CN 202210054768
(71) Applicant: Majesty Holdings Co., Ltd, Zhongshan City, Guangdong Province 528400 (CN)
(72) Inventor: LIANG, Peihui, Zhongshan City, Guangdong Province 528400 (CN); ZHU, Maoyong, Zhongshan City, Guangdong Province 528400 (CN); ZHANG, Yonglei, Zhongshan City, Guangdong Province 528400 (CN)
(74) Representative: Behr, Wolfgang
(86) International application number: PCT/CN2022/078697
(87) International publication number: WO 2023/137832

(57) **Abstract**

A recyclable all-plastic self-locking pump, comprising a pump body, the pump body is provided with a pump chamber, the pump body is fixed with a bottle locking cap, the pump chamber is provided with a suction assembly capable of moving up and down therein, the pump chamber is provided with a locking cap capable of preventing the suction assembly from being detached from the pump chamber, a locking mechanism is provided between the pump rod and the locking cap, and a vent is provided on a wall of the pump chamber below the locking cap; a lower end of the pump chamber is provided with a one-way valve, a lower part of the suction assembly is provided with a control valve, the locking cap is provided with a conical lower protrusion, the bent nozzle is provided with a conical upper protrusion, and an outer wall of the pump rod between the locking cap and the bent nozzle is provided with a plastic ring, and a side face of the plastic ring is provided with a vertical opening. The plastic ring which is provided with a vertical opening elastically expands and contracts between the bidirectional conical protrusions, so that the plastic ring slides up and down more smoothly, and the liquid outflow is stable and uniform.

## Description

### Technical Field

The present invention relates to a recyclable all-plastic self-locking pump, and more particularly, to a recyclable all-plastic self-locking emulsion pump.

### Background

Emulsion pumps, also known as push-type emulsion pumps, are a liquid dispenser for pumping liquid in a bottle by pressing, and replenishing the air from the outside into the bottle using a principle of atmospheric balance. Emulsion pump has been widely used in daily chemical and pharmaceutical industries due to its exquisite design and convenient use.

However, the existing emulsion pumps contain metal springs and glass beads, and need to be disassembled for recycling, which is rather inconvenient. Moreover, there are many types of plastic materials used, generally containing at least three or more materials such as PP, PE, POM or TPEE, which cannot meet the European efficient recycling standards.

### Summary

An objective of the present invention is to overcome the defects of the prior art, and provide a simple structure, low cost, stable and uniform effluent, which is made of recoverable ≤ 10% PE + ≥ 90% PP and can achieve efficient recycling; energy-saving and environment-friendly recyclable all-plastic self-locking pump meeting the European efficient recycling standards.

The objective of the present invention is achieved as follows:
A recyclable all-plastic self-locking pump, characterized by comprising a pump body, wherein the pump body is provided with a pump chamber for liquid inflow at a lower part, the pump body is fixed with a bottle locking cap, the pump chamber is provided with a suction assembly capable of moving up and down therein to suck up the liquid from the bottle, and the suction assembly comprises a pump rod; an upper end of the pump rod is connected with a bent nozzle capable of driving the suction assembly to operate; the bent nozzle is provided with a liquid outlet channel, the pump chamber is provided with a locking cap capable of preventing the suction assembly from being detached from the pump chamber, a locking mechanism capable of preventing the bent nozzle from moving downwards when the bent nozzle stays in a locking position is provided between the pump rod and the locking cap, and a vent is provided on a wall of the pump chamber below the locking cap; a lower end of the pump chamber is provided with a one-way valve which can only allow the liquid in the bottle to be discharged upwards when the suction assembly moves, a lower part of the suction assembly is provided with a control valve which can control the liquid in the pump chamber to be ejected from the liquid outlet channel, the locking cap is provided with a conical lower protrusion with upper being small and lower being large, the bent nozzle is provided with a conical upper protrusion with upper being large and lower being small, and an outer wall of the pump rod between the locking cap and the bent nozzle is provided with a plastic ring which can reset the suction assembly after the suction assembly is pressed down; and a vertical opening is provided at a side of the plastic ring.

The recyclable all-plastic self-locking pump as described above, characterized in that the pump rod is provided with a suction channel, an upper part of the suction channel is communicated with the liquid outlet channel, the control valve comprises a liquid inlet provided at the lower part of the pump rod and communicates the suction channel with the pump chamber, an outer side of the pump rod is sleeved with a suction plug which can slide relative thereto and can seal the liquid inlet, and the outer wall of the pump rod is provided with a driving structure which can drive the suction plug 1 to slide, the lower part of the pump chamber is provided with a conical part capable of limiting the suction plug but allowing the lower part of the pump rod to be inserted, and the bottom of the pump rod is provided with a conical sealing plug capable of being inserted into the conical part.

The recyclable all-plastic self-locking pump as described above, characterized in that the bent nozzle comprises a lower connecting pipe and a transverse pipe, the conical upper protrusion is provided at the top inside the lower connecting pipe and is provided with an inner connecting pipe connected to the pump rod, a wall of the inner connecting pipe is provided with an internal thread, the top of the pump rod is provided with an external thread matching the internal thread, and the top of the inner connecting pipe is communicated with the transverse pipe.

The recyclable all-plastic self-locking pump as described above, characterized in that the locking mechanism comprises an annular step provided on an inner wall of the pump chamber for fixing the locking cap, a pair of vertical protruding strips provided opposite to each other are provided on the outer wall of the pump rod, the locking cap is provided with a locking cap hole through which the pump rod passes, a pair of symmetrically provided circular arc rings cooperating with the pair of protruding strips are provided on an inner wall of the locking cap hole, and limiting blocks are provided on both sides of the circular arc rings.

The recyclable all-plastic self-locking pump as described above, characterized in that the pump body, the bottle locking cap, the pump rod, the bent nozzle, the locking cap, the suction assembly, the one-way valve and the plastic ring are all injection-molded from a recyclable plastic material. The recyclable all-plastic self-locking pump as described above, characterized in that the driving structure comprises an upper limit rib provided on the outer wall of the pump rod above the liquid inlet, and a lower limit convex ring provided on the outer wall of the pump rod below the liquid inlet.

The recyclable all-plastic self-locking pump as described above, characterized in that the one-way valve is a pump bead provided at the lower end of the pump chamber.

Advantageous effects of the present invention are:
1. The locking cap of the present invention is provided with a conical lower protrusion, the bent nozzle is provided with a conical upper protrusion, forming a bidirectional conical guide, and a plastic ring provided with a vertical opening elastically expands and contracts between the bidirectional conical protrusions, so that the plastic ring slides up and down more smoothly, and the liquid outflow is stable and uniform.
2. The pump body, the bottle locking cap, the pump tube, the bent nozzle, the locking cap, the suction assembly, the one-way valve and the plastic ring of the present invention are all made of recyclable ≤ 10% PE + ≥ 90% PP, enabling efficient recycling; which are energy-saving and environmental protective and meet the European efficient recycling standards.

### Brief Description of the Drawings

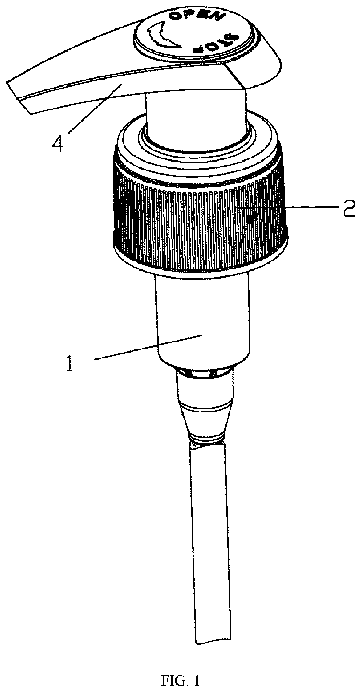

FIG. 1 is a perspective view according to the present invention;

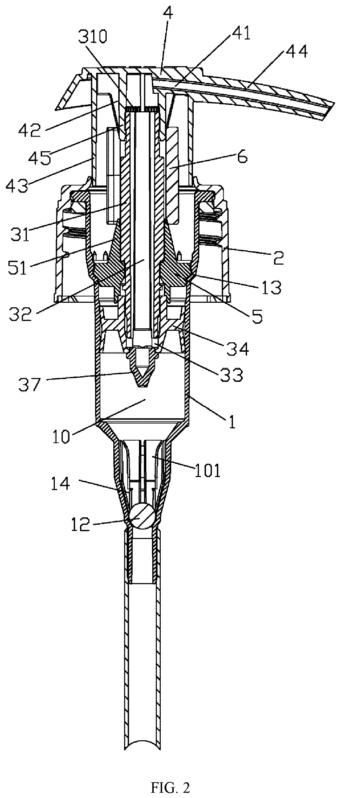

FIG. 2 is a cross-sectional view according to the present invention;

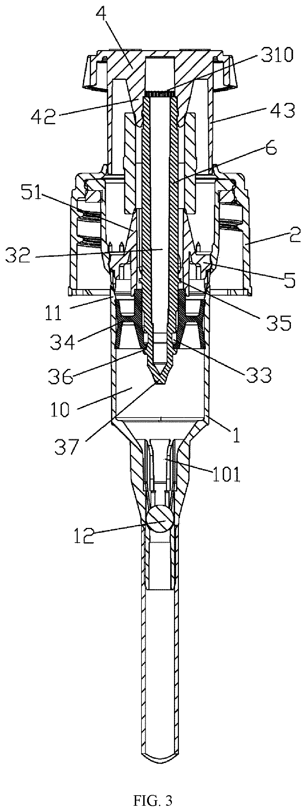

FIG. 3 is a cross-sectional view in another direction according to the present invention;

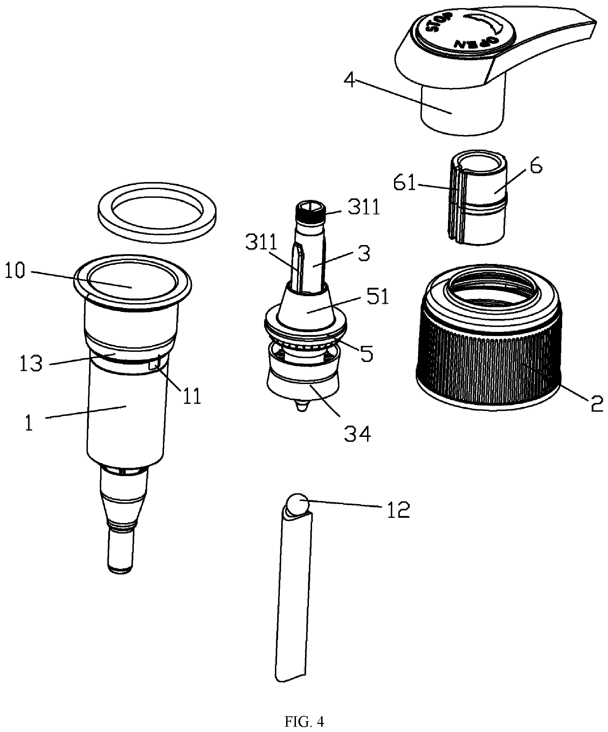

FIG. 4 is an exploded view of the structure according to the present invention;

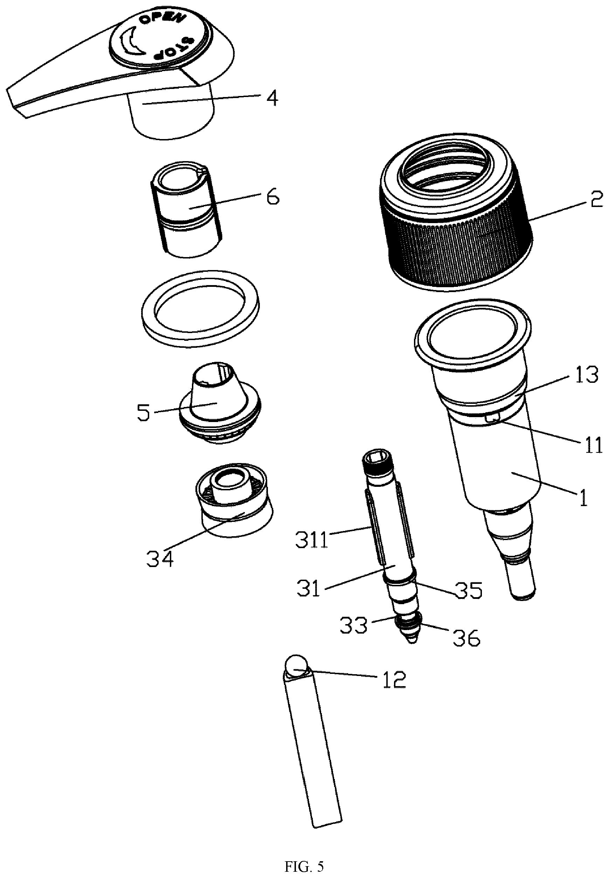

FIG. 5 is an exploded view of the structure according to the present invention;

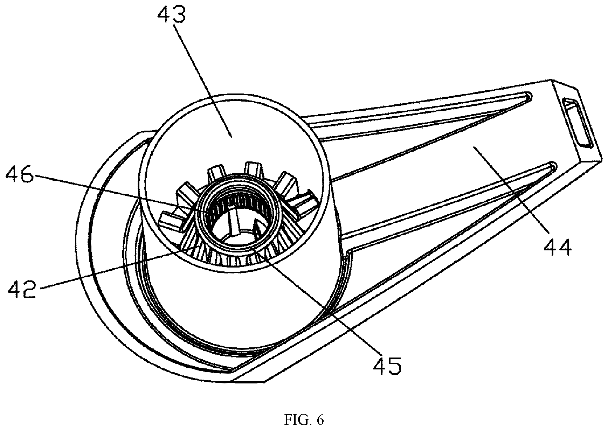

FIG. 6 is a block diagram of a bent nozzle according to the present invention;

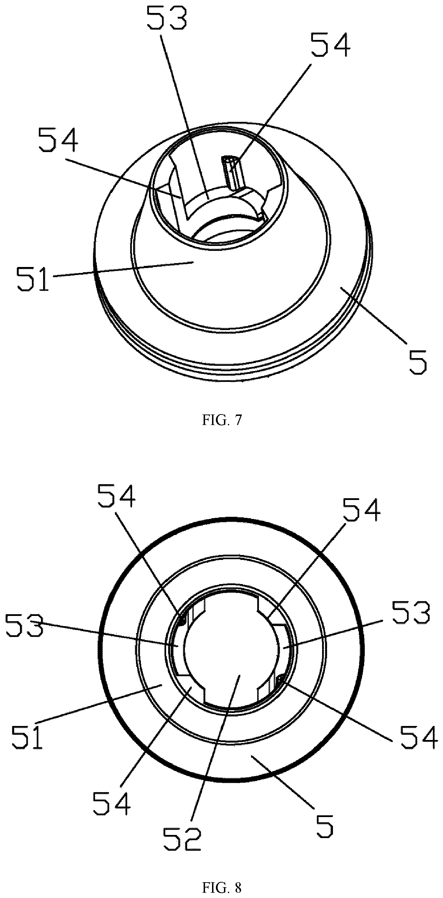

FIG. 7 is a structural view of the locking cap according to the present invention; and
FIG. 8 is a top view of the locking cap according to the present invention.

### Detailed Description

The present invention will now be described more fully hereinafter with reference to the accompanying drawings:

A recyclable all-plastic self-locking pump, characterized by comprising a pump body 1, wherein the pump body 1 is provided with a pump chamber 10 for liquid inflow at a lower part, the pump body 1 is fixed with a bottle locking cap 2, the pump chamber 10 is provided with a suction assembly 3 capable of moving up and down therein to suck up the liquid from the bottle, and the suction assembly 3 comprises a pump rod 31; an upper end of the pump rod 31 is connected with a bent nozzle 4 capable of driving the suction assembly 3 to operate; the bent nozzle 4 is provided with a liquid outlet channel 41, the pump chamber 10 is provided with a locking cap 5 capable of preventing the suction assembly 3 from being detached from the pump chamber 10, a locking mechanism capable of preventing the bent nozzle 4 from moving downwards when the bent nozzle 4 stays in a locking position is provided between the pump rod 31 and the locking cap 5, and a vent 11 is provided on a wall of the pump chamber 10 below the locking cap 5; a lower end of the pump chamber 10 is provided with a one-way valve 12 which can only allow the liquid in the bottle to be discharged upwards when the suction assembly 3 moves, a lower part of the suction assembly 3 is provided with a control valve which can control the liquid in the pump chamber 10 to be ejected from the liquid outlet channel 41, the locking cap 5 is provided with a conical lower protrusion 51 with upper being small and lower being large, the bent nozzle 4 is provided with a conical upper protrusion 42 with upper being large and lower being small, and an outer wall of the pump rod 31 between the locking cap 5 and the bent nozzle 4 being provided with a plastic ring 6 which can reset the suction assembly 3 after the suction assembly 3 is pressed down , and a side face of the plastic ring 6 is provided with a vertical opening 61. The locking cap 5 of the present invention is provided with a conical lower protrusion 51, the bent nozzle 4 is provided with a conical upper protrusion 42, forming a bidirectional conical guide, and a plastic ring 6 provided with a vertical opening 61 elastically expands and contracts between the bidirectional conical protrusions, so that the plastic ring 6 slides up and down more smoothly, and the liquid outflow is stable and uniform.

The pump body 1, the bottle locking cap 2, the pump tube 31, the bent nozzle 4, the locking cap 5, the suction assembly 3, the one-way valve 12 and the plastic ring 6 of the present invention are all injection moulding of a recyclable plastic material, and preferably the whole product is made of ≤ 10% PE + ≥ 90% PP, which can achieve efficient recycling; which are energy-saving and environmental protective and meet the European efficient recycling standards.

According to the present invention, the pump rod 31 is provided with a suction channel 32, an upper part of the suction channel 32 is communicated with the liquid outlet channel 41, the control valve comprises a liquid inlet 33 provided at the lower part of the pump rod 31 and communicates the suction channel 32 with the pump chamber 10, an outer side of the pump rod 31 is sleeved with a suction plug 34 which can slide relative thereto and can seal the liquid inlet 33, and the outer wall of the pump rod 31 is provided with a driving structure which can drive the suction plug 34 to slide, the lower part of the pump chamber 10 is provided with a conical part 101 capable of limiting the suction plug 34 but allowing the lower part of the pump rod 31 to be inserted, and the bottom of the pump rod 31 is provided with a conical sealing plug 37 capable of being inserted into the conical part 101.

According to the present invention, the bent nozzle 4 comprises a lower connecting pipe 43 and a transverse pipe 44, the conical upper protrusion 42 is provided at the top inside the lower connecting pipe 43 and is provided with an inner connecting pipe 45 connected to the pump rod 31, a wall of the inner connecting pipe 45 is provided with an internal thread 46, the top of the pump rod 31 is provided with an external thread 310 matching the internal thread 46, and the top of the inner connecting pipe 45 is communicated with the transverse pipe 44.

According to the present invention, the locking mechanism comprises an annular step 13 provided on an inner wall of the pump chamber 10 for fixing the locking cap 5, a pair of vertical protruding strips 311 provided opposite to each other are provided on the outer wall of the pump rod 31, the locking cap 5 is provided with a locking cap hole 52 through which the pump rod 31 passes, a pair of symmetrically provided circular arc rings 53 cooperating with the pair of protruding strips 311 are provided on an inner wall of the locking cap hole 52, and limiting blocks 54 are provided on both sides of the circular arc rings 53.

According to the present invention, the driving structure comprises an upper limit rib 35 provided on the outer wall of the pump rod 31 above the liquid inlet 33, and a lower limit convex ring 36 provided on the outer wall of the pump rod 31 below the liquid inlet 33.

According to the present invention, the one-way valve 12 of is a pump bead provided at the lower end of the pump chamber 10.

## Claims

**1.** A recyclable all-plastic self-locking pump, **characterized by** comprising a pump body (1), the pump body (1) being provided with a pump chamber (10) for liquid inflow at a lower part, the pump body (1) being fixed with a bottle locking cap (2), the pump chamber (10) being provided with a suction assembly (3) capable of moving up and down therein to suck up the liquid from the bottle, and the suction assembly (3) comprising a pump rod (31); an upper end of the pump rod (31) being connected with a bent nozzle (4) capable of driving the suction assembly (3) to operate, the bent nozzle (4) being provided with a liquid outlet channel (41), the pump chamber (10) being provided with a locking cap (5) capable of preventing the suction assembly (3) from being detached from the pump chamber (10), a locking mechanism capable of preventing the bent nozzle (4) from moving downwards when the bent nozzle (4) stays in a locking position being provided between the pump rod (31) and the locking cap (5), and a vent (11) being provided on a wall of the pump chamber (10) below the locking cap (5); a lower end of the pump chamber (10) being provided with a one-way valve (12) which can only allow the liquid in the bottle to be discharged upwards when the suction assembly (3) moves, a lower part of the suction assembly (3) being provided with a control valve which can control the liquid in the pump chamber (10) to be ejected from the liquid outlet channel (41), the locking cap (5) being provided with a conical lower protrusion (51) with upper being small and lower being large, the bent nozzle (4) being provided with a conical upper protrusion (42) with upper being large and lower being small, and an outer wall of the pump rod (31) between the locking cap (5) and the bent nozzle (4) being provided with a plastic ring (6) which can reset the suction assembly (3) after the suction assembly (3) is pressed down; and a vertical opening (61) is provided at a side of the plastic ring (6).

**2.** The recyclable all-plastic self-locking pump according to claim 1, **characterized in that** the pump rod (31) is provided with a suction channel (32), an upper part of the suction channel (32) is communicated with the liquid outlet channel (41), the control valve comprises a liquid inlet (33) provided at the lower part of the pump rod (31) and communicates the suction channel (32) with the pump chamber (10), an outer side of the pump rod (31) is sleeved with a suction plug (34) which can slide relative thereto and can seal the liquid inlet (33), and the outer wall of the pump rod (31) is provided with a driving structure which can drive the suction plug (34) to slide, the lower part of the pump chamber (10) is provided with a conical part (101) capable of limiting the suction plug (34) but allowing the lower part of the pump rod (31) to be inserted, and the bottom of the pump rod (31) is provided with a conical sealing plug (37) capable of being inserted into the conical part (101).

**3.** The recyclable all-plastic self-locking pump according to claim 1, **characterized in that** the bent nozzle (4) comprises a lower connecting pipe (43) and a transverse pipe (44), the conical upper protrusion (42) is provided at the top inside the lower connecting pipe (43) and is provided with an inner connecting pipe (45) connected to the pump rod (31), a wall of the inner connecting pipe (45) is provided with an internal thread (46), the top of the pump rod (31) is provided with an external thread (310) matching the internal thread (46), and the top of the inner connecting pipe (45) is communicated with the transverse pipe (44).

**4.** The recyclable all-plastic self-locking pump according to claim 1, **characterized in that** the locking mechanism comprises an annular step (13) provided on an inner wall of the pump chamber (10) for fixing the locking cap (5), a pair of vertical protruding strips (311) provided opposite to each other are provided on the outer wall of the pump rod (31), the locking cap (5) is provided with a locking cap hole (52) through which the pump rod (31) passes, a pair of symmetrically provided circular arc rings (53) cooperating with the pair of protruding strips (311) are provided on an inner wall of the locking cap hole (52), and limiting blocks (54) are provided on both sides of the circular arc rings (53).

**6.** The recyclable all-plastic self-locking pump according to claim 1, **characterized in that** the pump body (1), the bottle locking cap (2), the pump rod (31), the bent nozzle (4), the locking cap (5), the suction assembly (3), the one-way valve (12) and the plastic ring (6) are all injection-molded from a recyclable plastic material.

**7.** The recyclable all-plastic self-locking pump according to claim 1, **characterized in that** the driving structure comprises an upper limit rib (35) provided on the outer wall of the pump rod (31) above the liquid inlet (33), and a lower limit convex ring (36) provided on the outer wall of the pump rod (31) below the liquid inlet (33).

**8.** The recyclable all-plastic self-locking pump according to claim 1, **characterized in that** the one-way valve (12) is a pump bead provided at the lower end of the pump chamber (10).
